# FASCICULE DE BREVET EUROPEEN

(11) **EP 4 544 908 B1**
(45) Date de publication et mention de la délivrance du brevet: **13.05.2026**
(21) Numéro de dépôt: 24202062.6
(22) Date de dépôt: 23.09.2024
(51) Int. Cl.: A01M 7/00

(54) **DISPOSITIF DE FERMETURE ET DISPOSITIF D'EXTRACTION DE PRODUIT PHYTOSANITAIRE**
VERSCHLUSSVORRICHTUNG UND VORRICHTUNG ZUM ENTFERNEN VON PFLANZENSCHUTZMITTELN
CLOSING DEVICE AND DEVICE FOR EXTRACTING PLANT PROTECTION AGENT

(30) Priorité: 26.10.2023 FR 2311673
(43) Date de publication de la demande: 30.04.2025
(73) Titulaire: Exel Industries, 51200 Epernay (FR)
(72) Inventeur: BACLE, Thibault, 69003 LYON (FR); PARLANT, Mathieu, 51200 EPERNAY (FR)
(74) Mandataire: Bandpay & Greuter

(56) Documents cités:
- CN-A- 102 407 199
- FR-A1- 3 003 187
- KR-B1- 101 966 027
- KR-B1- 102 222 690
- US-A1- 2004 135 003
- US-B2- 10 369 585

## Description

### DOMAINE TECHNIQUE

La présente invention concerne le domaine de la pulvérisation agricole.

En particulier, la présente invention concerne un dispositif de fermeture destiné à coopérer avec un bidon de produit phytosanitaire pour pulvérisateur agricole.

L'invention concerne aussi un dispositif d'extraction de produit phytosanitaire comportant un tel dispositif de fermeture.

L'invention concerne aussi un engin agricole comportant un tel dispositif d'extraction.

### ETAT DE LA TECHNIQUE

Il est connu des procédés de pulvérisation de liquide sous pression, notamment de produit phytosanitaire agricole et des appareils destinés à de telles pulvérisations. En particulier, dans de tels appareils, une pression constante d'eau ou d'air est appliquée à une membrane expansible qui se gonfle et tend à épouser le contour interne d'un récipient dans lequel est contenu le liquide à pulvériser de façon à provoquer l'éjection de celui-ci. Le liquide à pulvériser s'achemine, de par le gonflement de la membrane, vers un conduit d'évacuation de liquide à pulvériser. Plus spécifiquement, selon l'état de l'art, pour une évacuation correcte du liquide à pulvériser, l'injection d'air pour que la membrane se gonfle s'effectue d'un côté du récipient et l'évacuation du liquide à pulvériser s'effectue du côté opposé dudit récipient. En effet, lorsque la membrane se gonfle par un côté du récipient, elle va permettre de pousser le liquide du côté opposé du récipient vers le conduit d'évacuation et donc permettre son évacuation par ledit conduit. KR101966027B1 divulgue un pulvérisateur portable d'agrochimiques capable de charger, d'alimenter et de renvoyer le liquide depuis un réservoir distant. Il comprend un réservoir de stockage, une pompe électrique, une unité d'alimentation, un dispositif de commande, trois tuyaux externes de succion, de refoulement et de sortie pouvant être reliés selon différentes configurations, un couvercle détachable doté d'une paroi inférieure, d'une paroi périphérique et d'un orifice de sortie, une vanne anti-débordement à aspiration d'air intégrée au couvercle, ainsi qu'un capteur de niveau d'eau qui interrompt la pompe lors du remplissage du réservoir.

Toutefois, de tels appareils avec ce type de pulvérisation nécessitent un récipient contenant le liquide à pulvériser particulier, un aménagement d'une entrée d'eau ou d'air et une sortie de liquide à pulvériser sur deux côtés opposés. Ainsi, le récipient est particulier à l'appareil et ce dernier est encombrant.

La présente invention vise donc à résoudre les problèmes susmentionnés en proposant un dispositif de fermeture destiné à coopérer avec un bidon de produit phytosanitaire et configuré pour faciliter et permettre l'évacuation d'un produit phytosanitaire. Ledit dispositif étant adaptable à différents bidons standards, il est commode et économique, mais permet aussi une certaine ergonomie du système de pulvérisation agricole auquel le dispositif de fermeture est destiné.

### PRESENTATION DE L'INVENTION

Plus précisément, l'invention a pour objet un dispositif de fermeture destiné à coopérer avec un circuit hydraulique de rinçage, avec un circuit pneumatique pour système de pulvérisation agricole, avec une sortie de produit phytosanitaire et avec un bidon de produit phytosanitaire, le dispositif de fermeture comportant au moins une paroi de fond et au moins une paroi périphérique. Le dispositif de fermeture est destiné à fermer le bidon. La paroi périphérique saillant de la paroi de fond, la paroi de fond présentent au moins trois ouvertures débouchantes, à savoir une première ouverture, une deuxième ouverture et une troisième ouverture, la première ouverture étant configurée pour être reliée à la sortie de produit phytosanitaire permettant d'évacuer ledit produit phytosanitaire dudit bidon, la deuxième ouverture étant d'une part configurée pour déboucher de façon étanche dans une membrane gonflable et d'autre part configurée pour être reliée à une arrivée du circuit pneumatique, de sorte à permettre de générer une surpression dans le bidon par l'expansion de la membrane gonflable au moyen du circuit pneumatique, ladite troisième ouverture étant configurée pour être reliée à une arrivée dudit circuit hydraulique de rinçage.

Le dispositif de fermeture selon l'invention peut être à usage unique ou réutilisable. Il permet, au travers de sa première ouverture, d'évacuer le produit phytosanitaire contenu dans le bidon sur lequel il est fixé. Au travers de sa deuxième ouverture, le dispositif de fermeture permet de gonfler et dégonfler la membrane gonflable de sorte à faciliter l'évacuation du produit phytosanitaire du bidon. Au travers de sa troisième ouverture, le dispositif de fermeture permet aussi le rinçage du bidon et de la membrane gonflable. Le dispositif de fermeture est adaptable à tout type de bidon standard ou non et présente l'avantage d'être compact, économique et ergonomique.

Avantageusement, le dispositif de fermeture selon l'invention comporte en outre une membrane gonflable, ladite membrane gonflable étant reliée à la deuxième ouverture de la paroi de fond, ladite membrane gonflable étant configurée pour s'expandre et/ou se contracter au moyen du circuit pneumatique, la membrane gonflable étant disposée du même côté de la paroi de fond que la paroi périphérique.

La membrane gonflable permet, par son expansion, de générer une surpression dans le bidon. En particulier, la membrane gonflable est reliée à la deuxième ouverture de la paroi de fond et est configurée pour s'expandre et/ou se contracter au moyen du circuit pneumatique. Elle est configurée pour s'expandre et se rétracter dans le bidon, une fois le dispositif de fermeture mis en place sur le bidon. L'expansion de la membrane gonflable et la surpression générée dans le bidon permettent l'acheminement du produit phytosanitaire à pulvériser contenu dans le bidon vers la première ouverture du dispositif de fermeture reliée à une sortie de produit phytosanitaire pendant l'usage du dispositif de fermeture.

Avantageusement encore, la membrane gonflable peut être une membrane souple extensible.

La membrane souple extensible est configurée pour, lorsqu'elle s'expand sous l'action du circuit pneumatique, épouser la paroi interne du bidon et permettre de pousser tout le produit phytosanitaire contenu dans le bidon, hors dudit bidon. En particulier, elle permet de faciliter l'évacuation du bidon de tout le produit phytosanitaire, même le liquide coincé dans une irrégularité de la paroi du bidon.

L'invention concerne également un dispositif d'extraction de produit phytosanitaire d'un bidon comportant au moins un dispositif de fermeture tel que brièvement décrit ci-dessus, au moins un circuit pneumatique et au moins une sortie de produit phytosanitaire, ledit dispositif de fermeture comportant au moins une membrane gonflable, au moins une paroi de fond et au moins une paroi périphérique saillant de la paroi de fond, ladite paroi de fond présentant au moins deux ouvertures débouchantes, une première ouverture et une deuxième ouverture, la première ouverture étant reliée à une sortie de produit phytosanitaire permettant d'évacuer ledit produit phytosanitaire dudit bidon, la deuxième ouverture étant d'une part reliée à la membrane gonflable et d'autre part reliée à une arrivée de circuit pneumatique, ladite membrane gonflable étant configurée pour s'expandre et/ou se contracter au moyen du circuit pneumatique, la membrane gonflable étant disposée du même côté de la paroi de fond que la paroi périphérique.

Le dispositif de fermeture est destiné à fermer un bidon. Le circuit pneumatique, relié au dispositif de fermeture par sa deuxième ouverture permet l'expansion de la membrane gonflable qui elle-même permet l'acheminement du produit phytosanitaire vers la sortie de produit phytosanitaire afin qu'il soit pulvérisé par une rampe de pulvérisation.

Selon un mode de réalisation, le circuit pneumatique comporte au moins un conduit, un distributeur, un régulateur de pression et une arrivée d'air comprimé, le conduit reliant le dispositif de fermeture au distributeur, lui-même relié par ledit conduit au régulateur de pression relié à l'arrivée d'air comprimé, ledit circuit pneumatique étant configuré pour permettre l'expansion de la membrane gonflable.

L'arrivée d'air comprimé achemine de l'air comprimé jusqu'au régulateur de pression qui permet le maintien et le contrôle de la pression de l'air. En particulier, le régulateur permet d'acheminer l'air comprimé à la pression souhaitée vers le distributeur de fermeture. L'injection d'air dans la membrane gonflable permet l'expansion de ladite membrane, qui génère une surpression dans le bidon. L'expansion de la membrane gonflable et la surpression générée dans le bidon permettent l'acheminement du liquide à pulvériser vers la première ouverture du dispositif de fermeture reliée à une sortie de produit phytosanitaire.

Avantageusement encore, le circuit pneumatique comporte en outre un générateur de vide, ledit conduit reliant le générateur de vide au distributeur, ledit générateur de vide étant configuré pour aspirer l'air contenu dans la membrane gonflable, engendrant sa contraction.

Une fois le bidon vidé du produit phytosanitaire, le générateur de vide permet d'aspirer l'air contenu dans la membrane gonflable, ce qui engendre sa contraction dans le bidon.

Avantageusement encore, le circuit pneumatique comporte en outre un conduit, un distributeur de rinçage à l'air et un régulateur de pression, ledit conduit reliant l'arrivée d'air comprimé au régulateur de pression, lui-même relié par ledit conduit au distributeur de rinçage à l'air, lui-même relié à la sortie de produit phytosanitaire, ledit circuit pneumatique étant configuré pour permettre le rinçage à l'air de la sortie de produit phytosanitaire.

L'arrivée d'air comprimé achemine de l'air comprimé jusqu'au régulateur de pression qui permet le maintien et le contrôle de la pression de l'air, puis jusqu'au distributeur de rinçage à l'air avant de l'acheminer dans le conduit de la sortie du produit phytosanitaire, jusqu'à la rampe de pulvérisation. L'injection d'air dans les conduits jusqu'à la rampe de pulvérisation permet de rincer avec de l'air les conduits par lesquels ont été acheminé le produit phytosanitaire pulvérisé. En particulier, le circuit pneumatique permet ici d'évacuer les particules de produit phytosanitaire restant dans les conduits.

Avantageusement, le dispositif d'extraction selon l'invention comporte en outre un circuit hydraulique de rinçage et dans lequel la paroi de fond dudit dispositif de fermeture présente une troisième ouverture débouchante reliée à une arrivée dudit circuit hydraulique de rinçage, configurée pour permettre le rinçage du bidon et de la membrane gonflable.

Le circuit hydraulique de rinçage permet l'acheminement d'un liquide de rinçage tel que de l'eau claire jusqu'à la troisième ouverture du dispositif de fermeture, puis dans le bidon. Ledit circuit hydraulique est configuré pour rincer avec le liquide de rinçage le bidon, une fois le produit phytosanitaire évacué. En particulier, le circuit hydraulique de rinçage permet d'évacuer les particules de produit phytosanitaire restant dans le bidon. Ainsi, le circuit hydraulique empêche la stagnation du produit phytosanitaire dans le bidon mais également sur la membrane gonflable.

L'invention concerne aussi un système de pulvérisation de liquide comportant un dispositif d'extraction tel que brièvement décrit ci-dessus et comportant en outre un bidon configuré pour contenir un produit phytosanitaire et sur lequel est fixé ledit dispositif de fermeture, le bidon étant d'une part relié, par la première ouverture du dispositif de fermeture, à un conduit de la sortie du liquide traitement configuré pour acheminer le produit phytosanitaire du bidon vers au moins une buse de pulvérisation, le bidon étant d'autre part relié par la troisième ouverture du dispositif de fermeture à un conduit d'arrivée du circuit hydraulique de rinçage configuré pour acheminer du liquide de rinçage dans le bidon de sorte à ce que ledit liquide de rinçage rince ledit bidon, et ledit bidon étant relié par la deuxième ouverture du dispositif de fermeture à un conduit d'arrivée du circuit pneumatique et à la membrane gonflable, ledit conduit d'arrivée de circuit pneumatique étant configuré pour acheminer du fluide dans la membrane gonflable de sorte à ce qu'elle s'expande dans l'enceinte du bidon, l'expansion de ladite membrane gonflable étant configurée pour mettre sous pression le produit phytosanitaire du bidon de sorte à créer un écoulement dudit produit phytosanitaire vers la sortie du produit phytosanitaire.

Selon un mode de réalisation, le système de pulvérisation comprend une enceinte pressurisée, le bidon et le dispositif d'extraction étant disposés à l'intérieur de l'enceinte pressurisée.

L'invention concerne également un engin agricole comportant un système de pulvérisation de liquide tel que brièvement décrit ci-dessus.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
la figure 1 est une représentation schématique d'un dispositif d'extraction de produit phytosanitaire selon l'invention, mis en place sur un bidon, ledit dispositif d'extraction comportant un dispositif de fermeture relié à un circuit pneumatique, à une sortie de produit phytosanitaire et à un circuit hydraulique de rinçage, ledit dispositif de fermeture comportant une membrane gonflable partiellement gonflée dans le bidon ;
la figure 2 est une vue similaire à la figure 1, mais la membrane gonflable du dispositif de fermeture est ici davantage gonflée et épouse la paroi interne du bidon ;
la figure 3 est un schéma du circuit pneumatique représenté sur la figure 1, permettant d'expandre et/ou contracter la membrane gonflable du dispositif de fermeture ;
la figure 4 montre un mode de réalisation similaire à celui de la figure 3, sauf en ce que le bidon et le dispositif d'extraction sont disposés dans une enceinte pressurisée ;
la figure 5 est identique à la figure 1, sauf en ce que le bidon et le dispositif d'extraction sont disposés dans une enceinte pressurisée.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de pulvérisation comportant un bidon 2 et un dispositif d'extraction 1 de produit phytosanitaire. En particulier, le bidon 2 est destiné à comporter du produit phytosanitaire et le dispositif d'extraction 1 est configuré pour permettre et faciliter l'extraction du produit phytosanitaire à l'extérieur du bidon 2 de sorte à être pulvérisé par le système de pulvérisation monté sur un engin agricole tel qu'un pulvérisateur agricole.

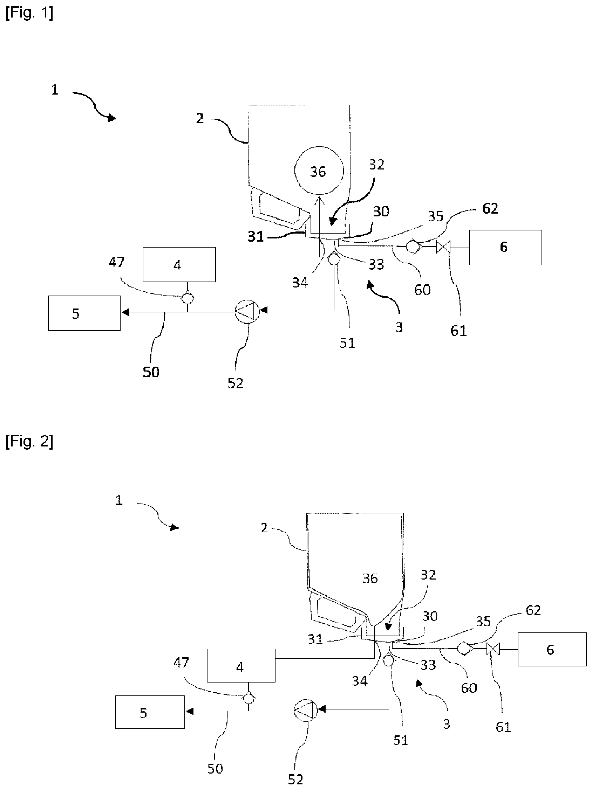

Tel que cela est représenté sur les figures 1 et 2, le dispositif d'extraction 1 de produit phytosanitaire comporte au moins un dispositif de fermeture 3, au moins un circuit pneumatique 4 et au moins une sortie de produit phytosanitaire 5.

Le dispositif d'extraction 1 peut comporter en outre le bidon 2 et un circuit hydraulique 6 de rinçage configuré pour permettre le rinçage du bidon 2.

Par « bidon », on entend tout contenant de produit actif, autrement dit du produit phytosanitaire, notamment potentiellement tout type de réservoir contenant à l'origine du produit phytosanitaire. Le vocable « bidon » couvre également un bidon dans lequel du produit phytosanitaire serait transféré, notamment à partir d'un réservoir.

Le bidon 2 est configuré pour contenir le produit phytosanitaire. Le bidon 2 est un bidon standardisé ou non connu de l'état de la technique, ayant des formes et des volumes variés. En particulier, il peut contenir du liquide phytosanitaire permettant le traitement des végétaux sur lequel il est pulvérisé.

Le dispositif de fermeture 3 est destiné à fermer le bidon 2.

En particulier, le dispositif de fermeture 3 comporte au moins une paroi de fond 30 et au moins une paroi périphérique 31.

Le dispositif de fermeture 3 peut par exemple prendre la forme d'un bouchon.

La paroi périphérique 31 saille de la paroi de fond 30. En particulier, la paroi périphérique 31 peut s'étendre sur le pourtour de la paroi de fond 30. Ladite paroi périphérique 31 et ladite paroi de fond 30 délimitant un logement de fixation 32.

En particulier, la paroi périphérique 31 est configurée pour coopérer avec le bidon 2, de sorte à fermer ce dernier.

Selon un mode de réalisation particulier de l'invention, la paroi périphérique 31 présente un filetage configuré pour s'adapter à un pas de vis du bidon 2, et ainsi permettre la fermeture du bidon 2.

Selon un autre mode de réalisation, la paroi périphérique 31 peut comporter un système de clip configuré pour coopérer avec un système de clip complémentaire présent sur le bidon 2, permettant la fermeture du bidon 2.

Il va de soi que l'invention n'est pas limitée à ces deux modes de fermeture du bidon 2, mais s'applique à tout type de mode de fermeture permettant la fermeture du bidon 2 par le dispositif de fermeture 3.

La paroi de fond 30 présente au moins trois ouvertures débouchantes, à savoir une première ouverture 33, une deuxième ouverture 34 et une troisième ouverture 35.

La première ouverture 33 est configurée pour être reliée à la sortie de produit phytosanitaire 5, permettant d'évacuer le produit phytosanitaire contenu dans le bidon 2, hors dudit bidon 2.

La deuxième ouverture 34 est d'une part configurée pour déboucher de façon étanche dans une membrane gonflable 36 et d'autre part pour être reliée à une arrivée du circuit pneumatique 4, de sorte à permettre de générer une surpression dans le bidon 2 par l'expansion de la membrane gonflable 36 au moyen du circuit pneumatique 4, et de sorte à permettre à la membrane gonflable 36 d'être dégonflée au besoin.

Avantageusement, le dispositif d'extraction 1 peut comporter en outre un organe de fermeture (non représenté) entre le dispositif de fermeture 3 et le circuit pneumatique 4. Ledit organe de fermeture est alors configuré pour empêcher l'écoulement du produit phytosanitaire contenu dans le bidon 2, notamment par gravité lors de la mise en place du bidon 2 dans le dispositif d'extraction 1 ou lors de la mise en place du dispositif de fermeture 3 sur le bidon 2 par exemple. L'organe de fermeture peut par exemple être un robinet, un coupleur standard, etc.

La troisième ouverture 35 est configurée pour être reliée à une arrivée du circuit hydraulique 6 de rinçage.

Le dispositif de fermeture 3 peut comporter en outre la membrane gonflable 36.

La membrane gonflable 36 est reliée à la deuxième ouverture 34 de la paroi de fond 30. La membrane gonflable 36 est configurée pour s'expandre et/ou se contracter au moyen du circuit pneumatique 4.

La membrane gonflable 36 est disposée du même côté de la paroi de fond 30 que la paroi périphérique 31. En d'autres termes, la membrane gonflable 36 est reliée à la deuxième ouverture 34, dans le logement de fixation 32.

Selon un mode de réalisation particulier de l'invention, la membrane gonflable 36 est une membrane souple extensible.

En particulier, la membrane souple extensible est configurée pour, lorsqu'elle s'expand sous l'action du circuit pneumatique, épouser la paroi interne du bidon 2, tel que cela est représenté sur la figure 2.

Il est à noter que la membrane gonflable 36 peut épouser l'ensemble des parois du bidon 2. Autrement dit, les parois du bidon 2 délimitant son ouverture fermée par le dispositif de fermeture 3 peuvent aussi être recouvertes par la membrane flexible 36.

Selon un autre mode de réalisation de l'invention, la membrane gonflable 36 peut avoir une forme prédéterminée correspondant à la forme du bidon 2, en particulier la forme du volume interne du bidon 2. Sous l'action du circuit pneumatique 4, la membrane gonflable 36 s'expand jusqu'à atteindre sa forme prédéterminée.

Dans le dispositif d'extraction 1 représenté sur les figures 1 et 2, le dispositif de fermeture 3 ferme le bidon 2. En particulier, le dispositif de fermeture 3 remplace le bouchon du bidon 2. Pour cela, le dispositif de fermeture 3 est fixé sur le bidon 2, de sorte à obturer son ouverture délimitée par sa paroi.

En particulier, le logement de fixation 32 est configuré pour loger une portion de la paroi du bidon 2, permettant d'obturer l'ouverture dudit bidon 2. La paroi de fond 30 du dispositif de fermeture 3 est dimensionnée pour correspondre à l'ouverture du bidon 2 et la paroi périphérique est configurée pour coopérer avec la portion de la paroi du bidon 2. Par exemple, la paroi périphérique 31 peut être, sur sa surface interne destinée à être en contact avec le bidon 2, taraudée. La portion de paroi externe du bidon 2, destinée à être en contact avec la paroi périphérique 31 du dispositif de fermeture 3, peut être filetée. Le taraudage de la paroi périphérique 31 correspond au filetage de la portion de paroi du bidon 2, de sorte que le dispositif de fermeture 3 soit fixé sur le bidon 2.

Le circuit pneumatique 4 est configuré pour permettre l'expansion de la membrane gonflable 36.

En particulier, dans une position initiale correspondant à la position dans laquelle le bidon 2 est complètement rempli de produit phytosanitaire, la membrane gonflable 36 est complètement rétractée et disposée à l'intérieur du bidon 2. Lorsqu'il est souhaité de pulvériser du produit phytosanitaire par l'engin agricole, le liquide doit être évacué du bidon 2. Pour cela, le circuit pneumatique 4 achemine de l'air dans la membrane gonflable 36, de sorte à permettre son expansion et générer une surpression dans le bidon 2. L'expansion de la membrane gonflable 36 et la surpression générée dans le bidon 2 permettent l'acheminement du liquide à pulvériser vers la première ouverture 33 du dispositif de fermeture 3 reliée à la sortie de produit phytosanitaire 5.

Avantageusement, le circuit pneumatique 4 peut comporter un dispositif de contrôle (non représenté) configuré pour contrôler la quantité d'air à injecter dans la membrane gonflable 36.

La sortie du produit phytosanitaire 5 peut comporter un conduit 50, un clapet 51 et une pompe 52.

En particulier, le conduit 50 est configuré pour acheminer le produit phytosanitaire du dispositif de fermeture 3 vers la rampe de pulvérisation de l'engin agricole. De plus, le conduit 50 relie la première ouverture 33 du dispositif de fermeture 3 au clapet 51, le clapet 51 à la pompe 52 et la pompe 52 à la rampe de pulvérisation.

La pompe 52 permet, une fois mise sous tension, d'activer la circulation du produit phytosanitaire du bidon 2 vers l'entrée de la pompe 52.

Le clapet 51 peut par exemple être un clapet de non-retour simple.

Le clapet 51 permet le passage du produit phytosanitaire dans le sens d'évacuation du produit phytosanitaire du bidon 2, c'est-à-dire du dispositif de fermeture 3 vers la rampe de pulvérisation. Au contraire, le clapet 51 empêche la circulation du produit phytosanitaire dans le sens inverse, c'est-à-dire en direction du bidon 2.

Ainsi, une fois la pompe 52 mise sous tension, le produit phytosanitaire est acheminé du bidon 2, vers le clapet 51 puis vers l'entrée de la pompe 52 pour ensuite être acheminé vers la rampe de pulvérisation.

Avantageusement, le dispositif d'extraction 1 peut ici aussi comporter en outre un organe de fermeture (non représenté) entre le dispositif de fermeture 3 et le clapet 51. Ledit organe de fermeture est configuré pour empêcher l'écoulement du produit phytosanitaire contenu dans le bidon 2, notamment par gravité lors de la mise en place du bidon 2 dans le dispositif d'extraction 1 ou lors de la mise en place du dispositif de fermeture 3 sur le bidon 2 par exemples. L'organe de fermeture peut par exemple être un robinet, un coupleur standard, etc.

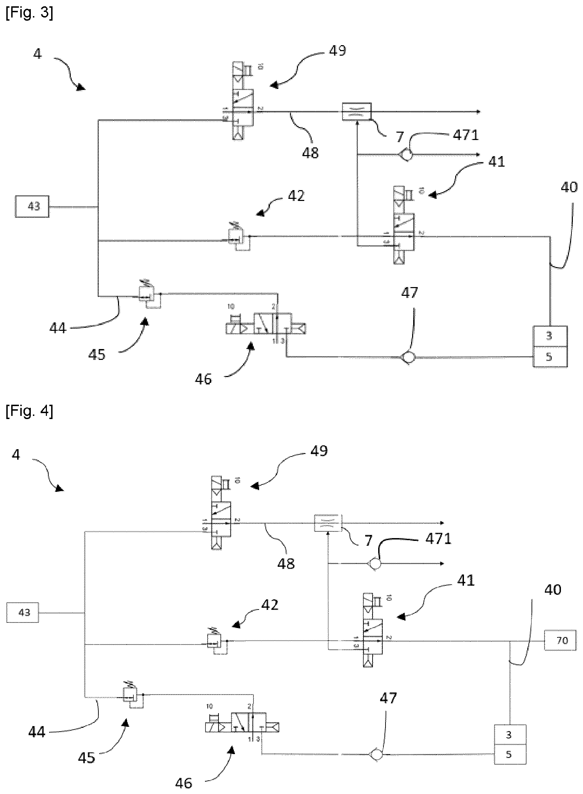

Le circuit pneumatique 4 représenté sur la figure 3, peut comporter un conduit 40 reliant le dispositif de fermeture 3 à un distributeur 41, lui-même relié par le conduit 40 à un régulateur de pression 42 relié à une arrivée d'air comprimé 43.

En particulier, la conduite 40 relie la deuxième ouverture 34 du dispositif de fermeture 3 à l'arrivée d'air comprimé 43.

L'arrivée d'air comprimé 43 achemine de l'air comprimé jusqu'au régulateur de pression 42 qui permet le maintien et le contrôle de la pression de l'air. L'injection d'air comprimé dans la membrane gonflable 36 permet l'expansion de ladite membrane 36, qui génère une surpression dans le bidon 2. L'expansion de la membrane gonflable 36 et la surpression générée dans le bidon 2 permettent l'acheminement du liquide à pulvériser vers la première ouverture 33 du dispositif de fermeture 3 reliée à une sortie de produit phytosanitaire.

De plus, le circuit pneumatique 4 peut comporter en outre un conduit 44 reliant l'arrivée d'air comprimé 43 à un régulateur de pression 45, lui-même relié par le conduit 44 à un distributeur de rinçage à l'air 46. Le distributeur de rinçage à l'air 46 est aussi relié par un autre conduit à un clapet 47 relié à la sortie du produit phytosanitaire 5.

L'arrivée d'air comprimé 43 achemine de l'air comprimé jusqu'au régulateur de pression 45 qui permet le maintien et le contrôle de la pression de l'air, puis jusqu'au distributeur de rinçage à l'air 46 qui permet de l'acheminer dans le conduit de la sortie du produit phytosanitaire 5, jusqu'à la rampe de pulvérisation. L'injection d'air dans les conduits jusqu'à la rampe de pulvérisation permet de rincer avec de l'air les conduits par lesquels a été acheminé le produit phytosanitaire pulvérisé. En particulier, le circuit pneumatique 4 permet ici d'évacuer les particules de produit phytosanitaire restant dans les conduits.

De plus, le circuit pneumatique 4 peut comporter en outre un conduit 48 reliant l'arrivée d'air comprimé 43 à un distributeur 49, lui-même relié par le conduit 48 à un générateur de vide 7. Par ailleurs, le distributeur 41 est relié au générateur de vide 7. Le générateur de vide 7 est chargé d'accélérer l'air présent dans le conduit 48 afin de créer une dépression dans ce conduit 48, de sorte à aspirer l'air présent dans la membrane gonflable 36 et ainsi la dégonfler. La pression à l'intérieur de la membrane gonflable 36 peut alors éventuellement être inférieure à la pression atmosphérique. Ledit générateur de vide 7 fonctionne grâce à l'effet venturi.

Le distributeur 49 permet d'activer le générateur de vide 7 lorsqu'il est souhaité de dégonfler la membrane gonflable 36.

Une fois le bidon 2 vidé du produit phytosanitaire, le générateur de vide 7 permettrait alors d'aspirer l'air contenu dans la membrane gonflable 36, qui a été décomprimée par le distributeur 41, ce qui engendrerait sa contraction dans le bidon 2.

Le générateur de vide 7 peut, par exemple, être un venturi.

En parallèle du générateur de vide 7, notamment du venturi, il peut être prévu, toujours en regard de la figure 3, un clapet 471 permettant de décomprimer la membrane gonflable 36 sans passer par le générateur de vide 7. La membrane gonflable 36 n'est alors pas tirée au vide, la pression à l'intérieure de la membrane gonflable 36 ne peut donc pas être inférieure à la pression atmosphérique. Dans ce mode de réalisation, selon un premier mode de fonctionnement, le distributeur 49 laisse passer l'air comprimé et on décomprime la membrane gonflable 36, au moyen du générateur de vide 7, à travers le distributeur 41, ce qui est décrit précédemment. Selon un deuxième mode de fonctionnement, le distributeur 49 ne laisse pas passer l'air comprimé, le distributeur 41 étant alors dans une position configurée pour laisser passer l'air contenu dans la membrane gonflable 36, qui n'a d'autre choix que de sortir par le clapet 471.

Le circuit hydraulique 6 de rinçage est relié par un conduit 60 à une vanne 61, elle-même reliée au clapet 62, lui-même relié à la troisième ouverture 35 du dispositif de fermeture 3.

Le circuit hydraulique 6 de rinçage permet l'acheminement de liquide de rinçage tel que de l'eau claire au travers du conduit 60, puis au travers de la vanne 61 et du clapet 62 jusqu'à la troisième ouverture 35 du dispositif de fermeture 3, puis dans le bidon 2.

Le clapet 62 peut par exemple être un clapet de non-retour simple.

Le clapet 62 permet le passage de l'eau claire en direction de l'intérieur du bidon 2, c'est-à-dire en direction du dispositif de fermeture 3. Au contraire, le clapet 62 empêche la circulation de l'eau claire dans le sens inverse, c'est-à-dire en direction du circuit hydraulique 6.

Dans ce mode de réalisation également, le dispositif d'extraction 1 peut avantageusement comporter en outre un organe de fermeture (non représenté) entre le dispositif de fermeture 3 et le clapet 62. Ledit organe de fermeture est configuré pour empêcher l'écoulement du produit phytosanitaire contenu dans le bidon 2, notamment par gravité lors de la mise en place du bidon 2 dans le dispositif d'extraction 1 ou lors de la mise en place du dispositif de fermeture 3 sur le bidon 2 par exemples. L'organe de fermeture peut par exemple être un robinet, un coupleur standard, etc.

Le circuit hydraulique 6 de rinçage est configuré pour rincer avec de l'eau claire par exemple le bidon 2 une fois le produit phytosanitaire évacué. En particulier, le circuit hydraulique 6 de rinçage permet d'évacuer les particules de produit phytosanitaire restant dans le bidon 2, ainsi que sur la membrane gonflable 36.

Ainsi, le circuit hydraulique 6 empêche la stagnation du produit phytosanitaire dans le bidon 2.

Lorsque le bidon 2 est complètement rempli de produit phytosanitaire, dans sa position initiale, la membrane gonflable 36 est complètement rétractée et s'étend à l'intérieur du bidon 2. Lorsqu'il est souhaité de pulvériser du produit phytosanitaire, le produit phytosanitaire est évacué du bidon 2. Le circuit pneumatique 4, par son arrivée d'air comprimé 43 achemine de l'air comprimé jusqu'au régulateur de pression 42 avant de l'acheminer dans la membrane gonflable 36. L'injection d'air comprimé dans la membrane gonflable 36 permet l'expansion de ladite membrane 36, qui génère une surpression dans le bidon 2. L'expansion de la membrane gonflable 36 et la surpression générée dans le bidon 2 permettent l'acheminement du liquide à pulvériser vers la première ouverture 33 du dispositif de fermeture 3 reliée à une sortie de produit phytosanitaire. La membrane gonflable 36 s'expand de sorte à évacuer la quantité de produit phytosanitaire nécessaire à la pulvérisation. La membrane gonflable 36 permet de pousser le produit phytosanitaire hors du bidon 2. En particulier, la membrane gonflable 36 est configurée pour épouser la paroi interne du bidon 2 en expansion et de pousser le produit phytosanitaire, même s'il est coincé dans une portion de l'enceinte du bidon 2.

Une fois le produit phytosanitaire totalement évacué du bidon 2, le générateur de vide 7 du circuit pneumatique 4 peut aspirer l'air contenu dans la membrane gonflable 36, qui traverserait en premier lieu le distributeur 41 qui permettrait à l'air d'être acheminé vers le générateur de vide 7, ce qui engendrerait sa contraction dans le bidon 2.

Puis, le circuit hydraulique 6 de rinçage achemine du liquide de rinçage tel que de l'eau claire dans le bidon 2, au travers du conduit 60, puis au travers de la vanne 61 et du clapet 62 jusqu'à la troisième ouverture 35 du dispositif de fermeture 3. L'eau claire ainsi acheminée dans le bidon 2 permet d'évacuer les particules de produit phytosanitaire restant dans le bidon 2 et sur la membrane gonflable 36.

L'eau claire contenant les particules de produit phytosanitaire forme alors de l'eau grise. Cette eau grise est évacuée par le conduit 50. L'eau grise est alors acheminée par exemple vers la rampe de pulvérisation de l'engin agricole ou vers une cuve permettant son stockage avant sa pulvérisation.

Enfin, l'arrivée d'air comprimé 43 du circuit pneumatique 4 achemine de l'air comprimé jusqu'au régulateur de pression 45 puis jusqu'au distributeur de rinçage à l'air 46 avant de l'acheminer dans le conduit de la sortie du produit phytosanitaire 5, jusqu'à la rampe de pulvérisation. L'injection d'air dans les conduits jusqu'à la rampe de pulvérisation permet de rincer avec de l'air les conduits par lesquels ont été acheminé le produit phytosanitaire pulvérisé et/ou l'eau grise. En particulier, le circuit pneumatique 4 permet ici d'évacuer les particules de produit phytosanitaire restant dans les conduits.

Le dispositif de fermeture 3 peut être à usage unique ou réutilisable.

Dans le cas où le dispositif de fermeture 3 est réutilisable, il peut être ôté du bidon 2 vide et rincé puis monté sur un autre bidon 2 rempli contenant le même produit phytosanitaire ou tout autre liquide.

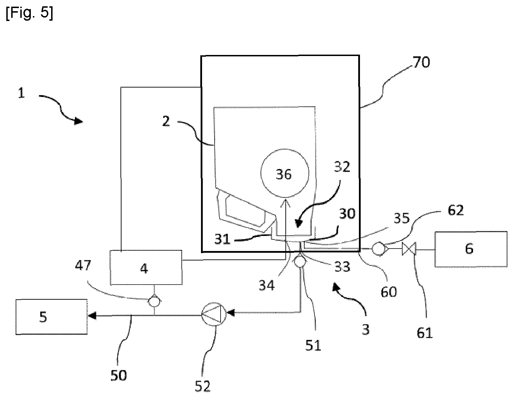

La figure 4 et la figure 5 représentent schématiquement un mode de réalisation particulier, dans lequel le bidon et le bouchon sont disposés dans une enceinte pressurisée. La figure 4 est identique à la figure 3, sauf en ce qu'elle montre l'enceinte pressurisée 70. La figure 5 est identique à la figure 1, sauf en ce qu'elle montre l'enceinte pressurisée 70.

Selon le mode de réalisation représenté sur la figure 4 et la figure 5, on peut ainsi placer l'ensemble du dispositif d'extraction 1, ainsi que le bidon 2, dans une enceinte pressurisée 70 fermée. L'enceinte pressurisée 70 est configurée pour résister à des pressions importantes, notamment de l'ordre de ou supérieures à 6 bars, par exemple de l'ordre de 10 bars. Il est alors possible de mettre sous pression cette enceinte pressurisée 70 en même temps que le fluide contenu à l'intérieur du bidon 2, grâce au régulateur d'air 42. Cela permet de d'entretenir une même pression à l'intérieur de l'enceinte pressurisée 70 et à l'intérieur de la membrane gonflable 36 et par conséquent à l'intérieur du bidon 2. Par conséquent, il n'existe alors pas de différence de pression entre l'intérieur et l'extérieur du bidon 2. Il est de ce fait possible d'appliquer une pression plus importante sur le bidon 2, peu important ses caractéristiques physiques intrinsèques de résistance à la pression, du fait de cet équilibre entre la pression à l'intérieur du bidon 2 et la pression entretenue dans l'enceinte pressurisée 70 et s'appliquant donc sur l'extérieur du bidon 2.

La différence entre la pression du produit phytosanitaire et la pression atmosphérique est, dans ce mode de réalisation, potentiellement élevée. Par exemple, on peut entretenir une pression de l'ordre d'une dizaine de bars dans l'enceinte pressurisée 70. Ceci peut également permettre d'alimenter la rampe de pulvérisation en produit phytosanitaire sans utiliser de pompe 52 pour injecter le produit phytosanitaire.

On notera par ailleurs que l'invention n'est pas limitée aux modes de réalisation décrits précédemment. Il apparaîtra en effet à l'homme du métier que diverses modifications peuvent être apportées au mode de réalisation décrit ci-dessus, à la lumière de l'enseignement qui vient de lui être divulgué.

En particulier, selon une variante, le générateur de vide 7 est omis et la membrane gonflable 36 ne se dégonfle non plus au moyen dudit générateur de vide 7 mais au contact de l'eau claire acheminée dans le bidon 2 pour son rinçage.

## Revendications

1. Dispositif de fermeture (3) destiné à coopérer avec un circuit hydraulique (6) de rinçage, avec un circuit pneumatique (4) pour système de pulvérisation agricole, avec une sortie de produit phytosanitaire (5) et avec un bidon (2) de produit phytosanitaire, le dispositif de fermeture (3) comportant :
- au moins une paroi de fond (30) ; et
- au moins une paroi périphérique (31) ;
le dispositif de fermeture (3) étant destiné à fermer le bidon (2),
la paroi périphérique (31) saillant de la paroi de fond (30), ladite paroi de fond (30) présentant au moins trois ouvertures débouchantes, à savoir une première ouverture (33), une deuxième ouverture (34) et une troisième ouverture (35), la première ouverture (33) étant configurée pour être reliée à la sortie de produit phytosanitaire (5) permettant d'évacuer ledit produit phytosanitaire dudit bidon (2), la deuxième ouverture (34) étant d'une part configurée pour déboucher de façon étanche dans une membrane gonflable (36) et d'autre part configurée pour être reliée à une arrivée du circuit pneumatique (4), de sorte à permettre de générer une surpression dans le bidon (2) par l'expansion de la membrane gonflable (36) au moyen du circuit pneumatique (4), ladite troisième ouverture (35) étant configurée pour être reliée à une arrivée dudit circuit hydraulique (6) de rinçage.

2. Dispositif de fermeture (3) selon la revendication précédente, comportant en outre une membrane gonflable (36), ladite membrane gonflable (36) étant reliée à la deuxième ouverture (34) de la paroi de fond (30), ladite membrane gonflable (36) étant configurée pour s'expandre et/ou se contracter au moyen du circuit pneumatique (4), la membrane gonflable (36) étant disposée du même côté de la paroi de fond (30) que la paroi périphérique (31).

3. Dispositif de fermeture (3) selon la revendication précédente, dans lequel la membrane gonflable (36) est une membrane souple extensible.

4. Dispositif d'extraction (1) de produit phytosanitaire d'un bidon (2) de produit phytosanitaire, comportant :
- au moins un dispositif de fermeture (3) selon l'une quelconque des revendications 1 à 3 ;
- au moins un circuit pneumatique (4) ; et
- au moins une sortie de produit phytosanitaire (5) ;
ledit dispositif de fermeture (3) comportant au moins une membrane gonflable (36), au moins une paroi de fond (30) et au moins une paroi périphérique (31) saillant de la paroi de fond (30), ladite paroi de fond (30) présentant au moins deux ouvertures débouchantes, une première ouverture (33) et une deuxième ouverture (34), la première ouverture (33) étant reliée à une sortie de produit phytosanitaire (5) permettant d'évacuer ledit produit phytosanitaire dudit bidon (2), la deuxième ouverture (34) étant d'une part reliée à la membrane gonflable (36) et d'autre part reliée à une arrivée de circuit pneumatique (4), ladite membrane gonflable (36) étant configurée pour s'expandre et/ou se contracter au moyen du circuit pneumatique (4), la membrane gonflable (36) étant disposée du même côté de la paroi de fond (30) que la paroi périphérique (31).

5. Dispositif d'extraction (1) selon la revendication précédente, dans lequel le circuit pneumatique (4) comporte au moins un conduit (40), un distributeur (41), un régulateur de pression (42) et une arrivée d'air comprimé (43), le conduit (40) reliant le dispositif de fermeture (3) au distributeur (41), lui-même relié par ledit conduit (40) au régulateur de pression (42) relié à l'arrivée d'air comprimé (43), ledit circuit pneumatique (4) étant configuré pour permettre l'expansion de la membrane gonflable (36).

6. Dispositif d'extraction (1) selon la revendication précédente, dans lequel le circuit pneumatique (4) comporte en outre un générateur de vide (7), ledit conduit (40) reliant le générateur de vide (7) au distributeur (41), ledit générateur de vide (7) étant configuré pour aspirer l'air contenu dans la membrane gonflable (36), engendrant sa contraction.

7. Dispositif d'extraction (1) selon l'une des revendications 5 à 6, dans lequel le circuit pneumatique (4) comporte en outre un conduit (44), un distributeur de rinçage à l'air (46) et un régulateur de pression (45), ledit conduit (44) reliant l'arrivée d'air comprimé (43) au régulateur de pression (45), lui-même relié par ledit conduit (44) au distributeur de rinçage à l'air (46), lui-même relié à la sortie de produit phytosanitaire (5), ledit circuit pneumatique (4) étant configuré pour permettre le rinçage à l'air de la sortie de produit phytosanitaire (5).

8. Dispositif d'extraction (1) selon l'une quelconque des revendications 4 à 7, comportant en outre un circuit hydraulique (6) de rinçage et dans lequel la paroi de fond (30) du dispositif de fermeture (3) présente une troisième ouverture (35) débouchante reliée à une arrivée dudit circuit hydraulique (6) de rinçage, configurée pour permettre le rinçage du bidon (2) et de la membrane gonflable (6).

9. Système de pulvérisation de liquide comportant un dispositif d'extraction selon l'une quelconque des revendications 4 à 8 et comportant en outre un bidon (2) configuré pour contenir un produit phytosanitaire et sur lequel est fixé ledit dispositif de fermeture (3), le bidon (2) étant d'une part relié, par la première ouverture (33) du dispositif de fermeture (3), à un conduit (50) de la sortie du liquide traitement (5) configuré pour acheminer le produit phytosanitaire du bidon (2) vers au moins une buse de pulvérisation, le bidon (2) étant d'autre part relié par la troisième ouverture (35) du dispositif de fermeture (3) à un conduit d'arrivée du circuit hydraulique (6) de rinçage configuré pour acheminer du liquide de rinçage dans le bidon (2) de sorte à ce que ledit liquide de rinçage rince ledit bidon (2), et ledit bidon étant relié par la deuxième ouverture (34) du dispositif de fermeture (3) à un conduit d'arrivée du circuit pneumatique (4) et à la membrane gonflable (36), ledit conduit d'arrivée de circuit pneumatique (4) étant configuré pour acheminer du fluide dans la membrane gonflable (36) de sorte à ce qu'elle s'expande dans l'enceinte du bidon (2), l'expansion de ladite membrane gonflable (36) étant configurée pour mettre sous pression le produit phytosanitaire du bidon (2) de sorte à créer un écoulement dudit produit phytosanitaire vers la sortie du produit phytosanitaire (5).

10. Système de pulvérisation de liquide selon la revendication 9, comprenant une enceinte pressurisée (70), le bidon (2) et le dispositif d'extraction (1) étant disposés à l'intérieur de l'enceinte pressurisée.

11. Engin agricole comportant un système de pulvérisation de liquide selon la revendication 9 ou 10.

## Patentansprüche

1. Verschlussvorrichtung (3), die dazu bestimmt ist, mit einem hydraulischen Spülkreislauf (6), mit einem pneumatischen Kreislauf (4) für ein landwirtschaftliches Sprühsystem, mit einem Pflanzenschutzmittelauslass (5) und mit einem Kanister (2) für Pflanzenschutzmittel zusammenzuwirken, die Verschlussvorrichtung (3) umfassend:
- mindestens eine Bodenwand (30); und
- mindestens eine Umfangswand (31);
wobei die Verschlussvorrichtung (3) dazu bestimmt ist, den Kanister (2) zu verschließen,
die Umfangswand (31) von der Bodenwand (30) hervorsteht, die Bodenwand (30) mindestens drei Durchgangsöffnungen aufweist, nämlich eine erste Öffnung (33), eine zweite Öffnung (34) und eine dritte Öffnung (35), die erste Öffnung (33) konfiguriert ist, um mit dem Pflanzenschutzmittelauslass (5) verbunden zu werden, der es ermöglicht, das Pflanzenschutzmittel aus dem Kanister (2) abzulassen, wobei die zweite Öffnung (34) einerseits konfiguriert ist, um dicht in eine aufblasbare Membran (36) zu münden, und andererseits konfiguriert ist, um mit einem Zulauf des pneumatischen Kreislaufs (4) verbunden zu werden, um zu ermöglichen, durch die Expansion der aufblasbaren Membran (36) mittels des pneumatischen Kreislaufs (4) einen Überdruck in dem Kanister (2) zu erzeugen, wobei die dritte Öffnung (35) konfiguriert ist, um mit einem Zulauf des hydraulischen Spülkreislaufs (6) verbunden zu werden.

2. Verschlussvorrichtung (3) nach dem vorherigen Anspruch, ferner umfassend eine aufblasbare Membran (36), wobei die aufblasbare Membran (36) mit der zweiten Öffnung (34) der Bodenwand (30) verbunden ist, wobei die aufblasbare Membran (36) konfiguriert ist, um sich mittels des pneumatischen Kreislaufs (4) zu expandieren und/oder zu kontrahieren, wobei die aufblasbare Membran (36) auf der gleichen Seite der Bodenwand (30) wie die Umfangswand (31) angeordnet ist.

3. Verschlussvorrichtung (3) nach dem vorherigen Anspruch, wobei die aufblasbare Membran (36) eine flexible dehnbare Membran ist.

4. Extraktionsvorrichtung (1) für Pflanzenschutzmittel aus einem Kanister (2) für Pflanzenschutzmittel, umfassend:
- mindestens eine Verschlussvorrichtung (3) nach einem der Ansprüche 1 bis 3;
- mindestens einen pneumatischen Kreislauf (4); und
- mindestens ein Auslass für Pflanzenschutzmittel (5);
die Verschlussvorrichtung (3) umfassend mindestens eine aufblasbare Membran (36), mindestens eine Bodenwand (30) und mindestens eine Umfangswand (31), die von der Bodenwand (30) hervorsteht, wobei die Bodenwand (30) mindestens zwei Durchgangsöffnungen aufweist, eine erste Öffnung (33) und eine zweite Öffnung (34), die erste Öffnung (33) mit einem Pflanzenschutzmittelauslass (5) verbunden zu werden, der es ermöglicht, das Pflanzenschutzmittel aus dem Kanister (2) abzulassen, wobei die zweite Öffnung (34) einerseits mit der aufblasbaren Membran (36) und andererseits mit einem Zulauf des pneumatischen Kreislaufs (4) verbunden ist, wobei die aufblasbare Membran (36) konfiguriert ist, um sich mittels des pneumatischen Kreislaufs (4) zu expandieren und/oder zu kontrahieren, wobei die aufblasbare Membran (36) auf der gleichen Seite der Bodenwand (30) wie die Umfangswand (31) angeordnet ist.

5. Extraktionsvorrichtung (1) nach dem vorherigen Anspruch, wobei der pneumatische Kreislauf (4) mindestens eine Leitung (40), einen Verteiler (41), einen Druckregler (42) und eine Druckluftzufuhr (43) umfasst, die Leitung (40) die Verschlussvorrichtung (3) mit dem Verteiler (41) verbindet, der wiederum durch die Leitung (40) mit dem Druckregler (42) verbunden ist, der mit der Druckluftzufuhr (43) verbunden ist, wobei der pneumatische Kreislauf (4) konfiguriert ist, um die Expansion der aufblasbaren Membran (36) zu ermöglichen.

6. Extraktionsvorrichtung (1) nach dem vorherigen Anspruch, wobei der pneumatische Kreislauf (4) ferner einen Vakuumgenerator (7) umfasst, wobei die Leitung (40) den Vakuumgenerator (7) mit dem Verteiler (41) verbindet, wobei der Vakuumgenerator (7) konfiguriert ist, um die in der aufblasbaren Membran (36) enthaltene Luft anzusaugen, wodurch deren Kontraktion erzeugt wird.

7. Extraktionsvorrichtung (1) nach einem der Ansprüche 5 bis 6, wobei der pneumatische Kreislauf (4) ferner eine Leitung (44), einen Luftspülverteiler (46) und einen Druckregler (45) umfasst, wobei die Leitung (44) die Druckluftzufuhr (43) mit dem Druckregler (45) verbindet, der wiederum durch die Leitung (44) mit dem Luftspülverteiler (46) verbunden ist, der wiederum mit dem Pflanzenschutzmittelauslass (5) verbunden ist, wobei der pneumatische Kreislauf (4) konfiguriert ist, um das Spülen mit Luft des Pflanzenschutzmittelauslasses (5) zu ermöglichen.

8. Extraktionsvorrichtung (1) nach einem der Ansprüche 4 bis 7, ferner umfassend einen hydraulischen Spülkreislauf (6) und wobei die Bodenwand (30) der Verschlussvorrichtung (3) eine dritte Durchgangsöffnung (35) aufweist, die mit einem Zulauf des hydraulischen Spülkreislaufs (6) verbunden konfiguriert ist, um das Spülen des Kanisters (2) und der aufblasbaren Membran (6) zu ermöglichen.

9. Flüssigkeitssprühsystem, umfassend eine Extraktionsvorrichtung nach einem der Ansprüche 4 bis 8 und ferner umfassend mit einem Kanister (2), der konfiguriert ist, um ein Pflanzenschutzmittel zu enthalten, und an dem die Verschlussvorrichtung (3) befestigt ist, wobei der Kanister (2) einerseits durch die erste Öffnung (33) der Verschlussvorrichtung (3) mit einer Leitung (50) des Auslasses der Behandlungsflüssigkeit (5) verbunden ist, die konfiguriert ist, um das Pflanzenschutzmittel aus dem Kanister (2) zu mindestens einer Sprühdüse zu leiten, wobei der Kanister (2) andererseits durch die dritte Öffnung (35) der Verschlussvorrichtung (3) mit einer Einlassleitung des hydraulischen Spülkreislaufs (6) verbunden ist, die konfiguriert ist, um Spülflüssigkeit in den Kanister (2) zu leiten, sodass die Spülflüssigkeit den Kanister (2) spült, und wobei der Kanister durch die zweite Öffnung (34) der Verschlussvorrichtung (3) mit einer Zulaufleitung des pneumatische Kreislaufs (4) und der aufblasbaren Membran (36) verbunden ist, wobei die Zulaufleitung des pneumatische Kreislaufs (4) konfiguriert ist, um Fluid in die aufblasbare Membran (36) zu leiten, sodass sie sich in die Innenraum des Kanisters (2) expandiert, die Expansion der aufblasbaren Membran (36) konfiguriert ist, um das Pflanzenschutzmittel aus dem Kanister (2) unter Druck zu setzen, um einen Fluss des Pflanzenschutzmittels zu dem Pflanzenschutzmittelauslass (5) zu erzeugen.

10. Flüssigkeitssprühsystem nach Anspruch 9, umfassend einen Druckbehälter (70), wobei der Kanister (2) und die Extraktionsvorrichtung (1) innerhalb des Druckbehälters angeordnet sind.

11. Landwirtschaftliche Maschine, umfassend ein Flüssigkeitssprühsystem nach Anspruch 9 oder 10.

## Claims

1. Closing device (3) configured to cooperate with a hydraulic flushing circuit (6), with a pneumatic circuit (4) for agricultural spraying system, with an outlet of phytosanitary product (5) and with a can (2) of phytosanitary product, the closing device (3) comprising:
- at least a bottom wall (30); and
- at least a peripheral wall (31);
the closing device (3) being configured to close the can (2),
the peripheral wall (31) protruding from the bottom wall (30), said bottom wall (30) comprising at least three through openings, namely a first opening (33), a second opening (34) and a third opening (35), the first opening (33) being configured to be connected to the outlet of phytosanitary product (5) allowing the said phytosanitary product to be discharged from said can (2), the second opening (34) being on the one hand configured to open in a sealed manner into an inflatable membrane (36) and on the other hand configured to be connected to an inlet of the pneumatic circuit (4), so as to allow an overpressure to be generated in the can (2) by the expansion of the inflatable membrane (36) by means of the pneumatic circuit (4), said third opening (35) being configured to be connected to an inlet of said hydraulic flushing circuit (6).

2. Closing device (3) according to the preceding claim, further comprising an inflatable membrane (36), said inflatable membrane (36) being connected to the second opening (34) of the bottom wall (30), said inflatable membrane (36) being configured to expand and/or contract by means of the pneumatic circuit (4), the inflatable membrane (36) being disposed on the same side of the bottom wall (30) as the peripheral wall (31).

3. Closing device (3) according to the preceding claim, wherein the inflatable membrane (36) is a flexible expandable membrane.

4. Extracting device (1) of phytosanitary product from a can (2) of phytosanitary product, comprising:
- at least a closing device (3) according to any one of claims 1 to 3;
- at least a pneumatic circuit (4); and
- at least an outlet of phytosanitary product (5);
said closing device (3) comprising at least an inflatable membrane (36), at least a bottom wall (30) and at least a peripheral wall (31) protruding from the bottom wall (30), said bottom wall (30) comprising at least two through openings, a first opening (33) and a second opening (34), the first opening (33) being connected to an outlet of phytosanitary product (5) allowing the said phytosanitary product to be discharged from said can (2), the second opening (34) being on the one hand connected to the inflatable membrane (36) and on the other hand connected to a pneumatic circuit inlet (4), said inflatable membrane (36) being configured to expand and/or contract by means of the pneumatic circuit (4), the inflatable membrane (36) being disposed on the same side of the bottom wall (30) as the peripheral wall (31).

5. Extracting device (1) according to the preceding claim, wherein the pneumatic circuit (4) comprises at least a duct (40), a distributor (41), a pressure regulator (42) and a compressed air inlet (43), the duct (40) connecting the closing device (3) to the distributor (41), which is itself connected by said duct (40) to the pressure regulator (42) connected to the compressed air inlet (43), said pneumatic circuit (4) being configured to allow the expansion of the inflatable membrane (36).

6. Extracting device (1) according to the preceding claim, wherein the pneumatic circuit (4) further comprises a vacuum generator (7), said duct (40) connecting the vacuum generator (7) to the distributor (41), said vacuum generator (7) being configured to suck in the air contained in the inflatable membrane (36), causing its contraction.

7. Extracting device (1) according to any one of claims 5 to 6, wherein the pneumatic circuit (4) further comprises a duct (44), an air flushing distributor (46) and a pressure regulator (45), said duct (44) connecting the compressed air inlet (43) to the pressure regulator (45), which is itself connected by said duct (44) to the air flushing distributor (46), which is itself connected to the outlet of phytosanitary product (5), said pneumatic circuit (4) being configured to allow air flushing of the outlet of phytosanitary product (5).

8. Extracting device (1) according to any one of claims 4 to 7, further comprising a hydraulic flushing circuit (6) and wherein the bottom wall (30) of the closing device (3) has a third through opening (35) connected to an inlet of said hydraulic flushing circuit (6), configured to allow the flushing of the can (2) and the inflatable membrane (6).

9. Liquid spraying system comprising an extracting device according to any one of claims 4 to 8 and further comprising a can (2) configured to contain a phytosanitary product and on which said closing device (3) is fixed, the can (2) being on the one hand connected, by the first opening (33) of the closing device (3), to a duct (50) of the outlet of the treatment liquid (5) configured to convey the phytosanitary product from the can (2) to at least one spray nozzle, the can (2) being on the other hand connected by the third opening (35) of the closing device (3) to an inlet duct of the hydraulic flushing circuit (6) configured to convey flushing liquid into the can (2) so that said flushing liquid flushes said can (2), and said can being connected by the second opening (34) of the closing device (3) to an inlet duct of the pneumatic circuit (4) and to the inflatable membrane (36), said inlet duct of the pneumatic circuit (4) being configured to convey fluid into the inflatable membrane (36) so that it expands into the enclosure of the can (2), the expansion of said inflatable membrane (36) being configured to pressurize the phytosanitary product in the can (2) so as to create a flow of said phytosanitary product towards the outlet of the phytosanitary product (5).

10. Liquid spraying system according to claim 9, comprising a pressurized enclosure (70), the can (2) and the extracting device (1) being disposed inside the pressurized enclosure.

11. Agricultural machine comprising a liquid spraying system according to claim 9 or 10.
